(19) **Europäisches Patentamt / European Patent Office / Office européen des brevets**

(11) **EP 1 904 873 B1**

(12) **FASCICULE DE BREVET EUROPEEN**

(45) Date de publication et mention
de la délivrance du brevet:
**14.08.2013 Bulletin 2013/33**

(21) Numéro de dépôt: **06779041.0**

(22) Date de dépôt: **11.07.2006**

(51) Int Cl.:
*G01V 3/38* (2006.01)

(86) Numéro de dépôt international:
**PCT/FR2006/050705**

(87) Numéro de publication internationale:
**WO 2007/007008 (18.01.2007 Gazette 2007/03)**

(54) **PROCEDE D'ACQUISITION ET DE TRAITEMENT DE DONNEES MAGNETOMETRIQUES PAR DES MISES A JOUR LOCALES EN TEMPS REEL**

VERFAHREN ZUR AUFNAHME UND BEHANDLUNG MAGNETISCHER DATEN MITTELS LOKALER ECHTZEIT AKTUALISIERUNG

METHOD FOR ACQUIRING AND PROCESSING MAGNETOMETRIC DATA BY LOCAL UPDATES IN REAL TIME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.07.2005 FR 0552167**

(43) Date de publication de la demande:
**02.04.2008 Bulletin 2008/14**

(73) Titulaire: **IXBLUE**
**78160 Marly-le-Roi (FR)**

(72) Inventeurs:
• **TRUFFERT, Catherine**
**F-45000 Orleans (FR)**
• **CHARLOT, Didier**
**F-29680 Roscoff (FR)**
• **LALANNE, Xavier**
**F-77000 Melun (FR)**

(74) Mandataire: **Michelet, Alain et al**
**Cabinet HARLE et PHELIP**
**14-16, rue Ballu**
**75009 Paris (FR)**

(56) Documents cités:
• **LU R.S., MARIANO J., WILLEN D.E.: "Differential reduction of magnetic anomalies to the pole on a massively parallel computer" GEOPHYSICS, SEG, vol. 68, no. 6, novembre 2003 (2003-11), - décembre 2003 (2003-12) pages 1945-1951, XP002372654**
• **KEATING P., ZERBO L.: "An improved technique for reduction to the pole at low latitudes" GEOPHYSICS, SEG, vol. 61, no. 1, janvier 1996 (1996-01), - février 1996 (1996-02) pages 131-137, XP002372655**
• **ARKANI-HAMED J., URQUHART W.E.S.: "Reduction to the pole of the North American magnetic anomalies" GEOPHYSICS, SEG, vol. 55, no. 2, février 1990 (1990-02), pages 218-225, XP002372656**
• **SMITH W.H.F., WESSEL P.: "Gridding with coninuous curvature splines in tension" GEOPHYSICS, SEG, vol. 55, no. 3, mars 1990 (1990-03), pages 293-305, XP002372657 cité dans la demande**

**Description**

La présente invention concerne un procédé d'acquisition et de traitement de données magnétométriques par des mises à jour locales et en temps réel sur une carte à au moins deux dimensions de caractéristiques magnétométriques d'une zone géographique.

Les campagnes de levés de données magnétométriques réalisées en mer (« survey ») permettent de détecter des anomalies magnétiques comme celles, par exemple, générées par des mines ou des containers.

Ces levés de données magnétométriques sont obtenus à partir d'un navire par des capteurs magnétométriques (Géophysique Appliquée : Magnétisme, Notes de cours, Michel Chouteau, Ecole Polytechnique de Montréal, 2002).

Le procédé actuel consiste à mesurer un ensemble complet de données magnétométriques le long d'une trajectoire parcourue par le navire sur une zone géographique.

Lorsque la campagne de levés est terminée et que le navire est soit encore en mer, soit rentré au port, on applique différentes étapes de traitement de données à l'ensemble complet de données magnétométriques. Cette méthode de traitement est dite « globale » (Analyse Multi-échelle et Inversion de Données Géophysiques, Guyane Française, Pascal Sailhac (IPGP, France, 1999).

L'ensemble complet de données magnétométriques est préalablement interpolé sur une carte d'interpolation 2D. Cette première étape de traitement permet de reconstituer la surface de la zone géographique à partir de la ligne correspondant à la trajectoire du navire (Estimation et interpolation spatiale : Méthodes déterministes et méthodes géostatistiques, Michel Arnaud et Xavier Emery, Hermes Science publications, Paris, 2000 ; Gridding of Geophysical Potential Fields from Noisy Scattered Data, Michael Rauth, Institut de météorologie et de géophysique de l'université de Vienne, These, 1998).

Une deuxième étape de traitement est appliquée aux données de la carte d'interpolation 2D afin de pouvoir exploiter ces données.

Deux méthodes distinctes de traitement sont possibles. Elles permettent de compenser l'influence du champ terrestre sur la forme de l'anomalie magnétique. Elles permettent d'observer la forme réelle des anomalies magnétiques (Géophysique Appliquée : Magnétisme, Notes de cours, Michel Chouteau, Ecole Polytechnique de Montréal, 2002).

La première méthode de traitement est appelée réduction aux pôles. La deuxième est appelée calcul du signal analytique. On obtient dans les deux cas une carte à au moins deux dimensions (2D) représentée dans le plan (x, y), correspondant à la surface de la zone géographique.

Ces méthodes sont appliquées sur l'ensemble complet de données magnétométriques lorsque l'étape d'acquisition est terminée et que le navire est rentré au port.

Il arrive que les cartes 2D soient incomplètes et qu'elles présentent des « trous » après lés traitements de données ou bien que des zones d'intérêt potentiel s'avèrent un peu trop loin de la trajectoire du navire pour disposer d'une carte assez précise.

Dans ce cas, si l'utilisateur souhaite compléter ses données, le navire retourne compléter sa campagne de levés aux positions concernées. Cela peut représenter plusieurs dizaines ou centaines de kilomètres à reparcourir, un temps de mesure supplémentaire considérable et un surcoût.

L'objectif de la présente invention est donc de proposer un procédé et un dispositif d'acquisition et de traitement de données magnétométriques permettant la représentation, sur une carte à au moins deux dimensions, de caractéristiques magnétiques en temps réel par des mises à jour locales sur de petits échantillons de données.

A cet effet, l'invention concerne un procédé d'acquisition et de traitement de données magnétométriques pour la représentation sur une carte à au moins deux dimensions de caractéristiques magnétométriques d'une zone géographique comprenant :

- une étape de mesure de l'intensité du champ magnétique sur une zone géographique produisant un ensemble de données magnétométriques d'intensité B(s) formant une carte d'anomalies magnétiques, s représentant l'abscisse curviligne le long de la trajectoire du levé,
- une étape de calcul d'interpolation 2D appliquée à l'ensemble de données magnétométriques d'intensité B(s) produisant un ensemble de données magnétométriques interpolées d'intensité B(x,y) référencées selon les référentiels x et y sur une carte d'interpolation 2D,
- une étape de calcul de réduction aux pôles appliquée à l'ensemble de données magnétométriques interpolées d'intensité B(x,y) produisant un ensemble de données magnétométriques réduites aux pôles B'(x,y) représenté sur une carte 2D de réduction aux pôles,
- une étape de calcul du signal analytique appliquée à l'ensemble de données magnétométriques interpolées d'intensité B(x,y) produisant un ensemble de données magnétométriques analytiques B"(x,y) représenté sur une carte 2D du signal analytique.

Selon l'invention, ce procédé comprend :

- un découpage de la carte d'anomalies magnétiques en une matrice de pixels,
- une étape de mise à jour locale et en temps réel de la carte d'anomalies magnétiques par une étape de mesure élémentaire de l'intensité du champ magnétique sur une zone géographique réduite produisant une série élémentaire de données magnétométriques associée à un pixel mis à jour,
- une étape de mise à jour locale et en temps réel de la carte d'interpolation 2D par l'application du calcul d'interpolation 2D au voisinage du pixel mis à jour, produisant des pixels sur une carte d'interpolation 2D mise à jour,
- le procédé d'acquisition et de traitement comprend une étape de mise à jour locale et en temps réel de la carte 2D de réduction aux pôles par l'application à la carte d'interpolation 2D mise à jour du calcul de réduction aux pôles pour le pixel mis à jour et au voisinage dudit pixel mis à jour, produisant des pixels sur une carte de données magnétométriques réduites aux pôles mise à jour,
- le procédé d'acquisition et de traitement comprend une étape de mise à jour locale et en temps réel de la carte 2D du signal analytique par l'application à la carte d'interpolation 2D mise à jour du calcul du signal analytique pour le pixel mis à jour et au voisinage dudit pixel mis à jour, produisant des pixels sur une carte de données magnétométriques analytiques mise à jour.

Dans différents modes de réalisation possibles, la présente invention concerne également les caractéristiques qui ressortiront au cours de la description qui va suivre et qui devront être considérées isolément ou selon toutes leurs combinaisons techniquement possibles :

- l'étape de mise à jour locale et en temps réel de la carte d'interpolation 2D comprend un calcul du type minimum curvature,
- l'étape de mise à jour locale et en temps réel de la carte 2D de réduction aux pôles comprend une étape d'application d'un masque de convolution dans le domaine spatial ;
- l'étape de mise à jour locale et en temps réel de la carte 2D du signal analytique comprend :

  - une étape d'application d'un masque de convolution gradient X dans le domaine spatial produisant une sous image filtrée selon le référentiel X,
  - une étape d'application d'un masque de convolution gradient Y dans le domaine spatial produisant une sous image filtrée selon le référentiel Y,
  - une étape d'application d'un masque de convolution gradient Z dans le domaine spatial produisant une sous image filtrée selon le référentiel Z,
  - une étape de composition des sous images filtrées selon les référentiels X, Y et Z,

- le procédé d'acquisition et de traitement de données magnétométriques comprend une étape d'extraction d'un sous-ensemble à traiter de la carte d'interpolation 2D mise à jour, le sous-ensemble à traiter comportant le pixel mis à jour et le voisinage dudit pixel mis à jour,
- les étapes de mise à jour locale et en temps réel de la carte 2D de réduction aux pôles et de la carte 2D du signal analytique sont appliquées uniquement au sous-ensemble à traiter,
- l'étape de mise à jour locale et en temps réel de la carte 2D de réduction aux pôles comprend une opération de multiplication par un filtre complexe appliquée dans le domaine de Fourier au sous-ensemble à traiter générant un sous-ensemble traité,
- l'étape de mise à jour locale et en temps réel de la carte 2D du signal analytique comprend une opération de multiplication par un filtre gradient X, une opération de multiplication par un filtre gradient Y, une opération de multiplication par un filtre gradient Z appliquées dans le domaine de Fourier au sous-ensemble à traiter, chaque opération étant appliquée seule afin d'aboutir à trois cartes, l'une de gradient X, une autre de gradient Y, et la troisième de gradient Z,
- les trois cartes sont composées de façon à générer un seul sous-ensemble traité,
- les étapes de mise à jour locale et en temps réel de la carte 2D de réduction aux pôles et de la carte 2D du signal analytique comprennent une étape de recombinaison du sous-ensemble traité avec le reste des sous-ensembles,
- une déconvolution d'Euler est appliquée, localement et en temps réel, au pixel mis à jour et au voisinage dudit pixel mis à jour sur la carte 2D du signal analytique mise à jour de façon à permettre le référencement des sources magnétiques selon le référentiel z,
- une déconvolution d'Euler est appliquée, localement et en temps réel, au pixel mis à jour et au voisinage dudit pixel mis à jour sur la carte 2D du signal analytique mise à jour de façon à permettre le calcul de l'indice des sources magnétiques générant les pixels de données magnétométriques analytiques.

L'invention concerne également un dispositif d'acquisition et de traitement de données magnétométriques pour la production d'une carte à au moins deux dimensions de caractéristiques magnétométriques d'une zone géographique comprenant un moyen de mesure de données magnétométriques produisant un signal formant une carte d'anomalies magnétiques, une unité de traitement dudit signal produisant une carte 2D de réduction aux pôles et une carte 2D du signal analytique.

Selon l'invention, l'unité de traitement met en oeuvre, localement et en temps réel, le procédé décrit ci-dessus.

Dans différents modes de réalisation possibles, la présente invention concerne également les caractéristiques qui ressortiront au cours de la description qui va suivre et qui devront être considérées isolément ou selon toutes leurs combinaisons techniquement possibles :

- le moyen de mesure de données magnétométriques comprend au moins un capteur magnétométrique scalaire,
- le moyen de mesure de données magnétométriques est un capteur magnétométrique vectoriel apte à générer des données magnétométriques vectorielles Bx(s), By(s) et Bz(s), Bx(s), By(s) et Bz(s) étant les trois composantes du champ magnétique B(s),
- le moyen de mesure de données magnétométriques est un gradiomètre apte à générer des données de gradient d'au moins une des composantes du tenseur gradient du champ Gx ou Gy ou Gz,
- le moyen de mesure de données magnétométriques est un gradiomètre apte à générer des données de gradient d'au moins une des composantes du tenseur gradient du champ Gx ou Gy ou Gz et des données magnétométriques d'intensité B(s),
- le moyen de mesure de données magnétométriques est un gradiomètre apte à générer des données de gradient d'au moins une des composantes du tenseur gradient du champ Gx ou Gy ou Gz et des données magnétométriques vectorielles Bx(s), By(s) et Bz(s).

L'invention sera décrite plus en détail en référence aux dessins annexés dans lesquels:

- la figure 1 est une représentation schématique du procédé d'acquisition et de traitement de données magnétométriques selon l'art antérieur ;
- la figure 2 est une représentation des différentes étapes d'un procédé de traitement de données magnétométriques permettant l'obtention des cartes d'interpolation 2D et de réduction aux pôles selon l'art antérieur ;
- la figure 3 est une représentation des différentes étapes d'un procédé permettant d'obtenir une image masquée selon l'art antérieur ;
- la figure 4 est une représentation des différentes étapes d'un procédé de traitement de données magnétométriques permettant l'obtention d'une carte 2D du signal analytique selon l'art antérieur ;
- la figure 5 est une représentation d'un procédé d'acquisition et de traitement de données magnétométriques permettant une mise à jour locale et en temps réel des cartes 2D selon une première méthode ;
- la figure 6 est une représentation des différentes étapes d'un procédé d'acquisition et de traitement de données magnétométriques permettant une mise à jour locale et en temps réel des cartes 2D d'interpolation et de réduction aux pôles selon la première méthode ;
- la figure 7 une représentation des différentes étapes d'un procédé d'acquisition et de traitement de données magnétométriques permettant une mise à jour locale et en temps réel des cartes 2D du signal analytique selon la première méthode ;
- la figure 8 est une représentation d'un procédé d'acquisition et de traitement de données magnétométriques permettant une mise à jour locale et en temps réel des cartes 2D selon une deuxième méthode ;
- la figure 9 est une représentation des différentes étapes d'un procédé d'acquisition et de traitement de données magnétométriques permettant une mise à jour locale et en temps réel des cartes 2D de réduction aux pôles selon la deuxième méthode ;
- la figure 10 représente les premières étapes d'un procédé d'acquisition et de traitement de données magnétométriques permettant une mise à jour locale et en temps réel des cartes 2D du signal analytique selon la deuxième méthode ;
- la figure 11 représente la dernière étape (recombinaison) du procédé d'acquisition et de traitement de données magnétométriques permettant une mise à jour locale et en temps réel des cartes 2D du signal analytique selon la deuxième méthode ;

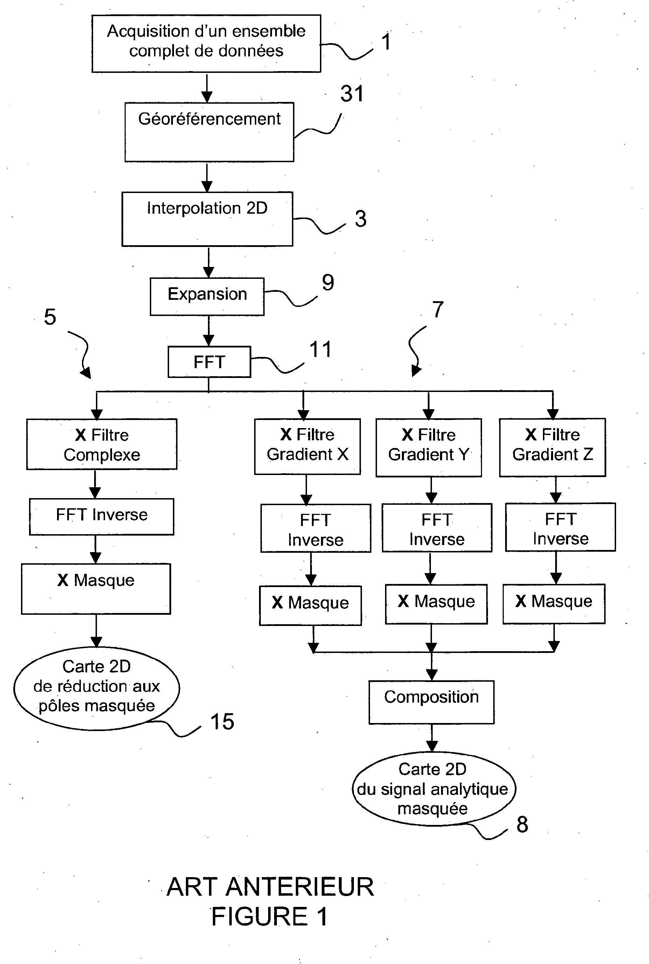

La figure 1 est une représentation schématique d'un procédé d'acquisition et de traitement de données magnétométriques selon l'art antérieur.

Ce procédé permet d'obtenir une représentation sur une carte à au moins deux dimensions de caractéristiques magnétométriques d'une zone géographique.

Il comprend une étape de mesure de l'intensité du champ magnétique 1 sur une zone géographique.

Cette étape de mesure 1 produit un ensemble de données magnétométriques d'intensité B(s) permettant de former une carte d'anomalies magnétiques 2 géoréférencée (s représente l'abscisse curviligne le long de la trajectoire du levé de données). La position géographique de chaque mesure peut être obtenue par GPS ou par d'autres moyens de positionnement.

Cette méthode d'acquisition est dite « globale » car l'ensemble complet de données magnétométriques est obtenu après l'étape d'acquisition 1.

C'est cet ensemble complet qui sera traité pour obtenir les cartes 2D.

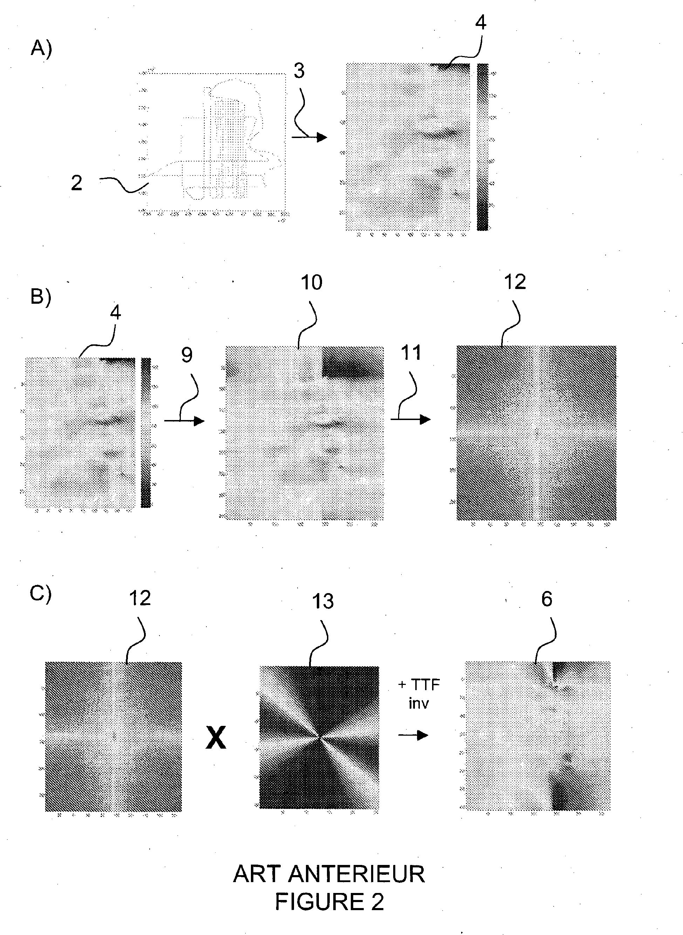

Une étape de calcul d'interpolation 2D 3, représentée sur la figure 2 A), est ensuite appliquée à l'ensemble de données magnétométriques d'intensité B(s).

Parmi la multitude de techniques de calcul d'interpolation 2D existantes, la méthode dite du "minimum curvature" est celle qui est la plus couramment utilisée pour le traitement des données de potentiels (Magnétiques, Gravimétrie).

Son principe a été présenté par Briggs en 1974 (Briggs, I. C., 1974, Machine contouring using minimum curvature : Geophysics : 39, 39-48). Si on considère une série de mesures, la surface 2D cherchée est cette pour laquelle le carré de la courbure totale de la surface passant par les points de mesure est minimal.

Cette méthode d'interpolation 2D est efficace pour des surfaces qui ne présentent pas de variations abruptes.

Néanmoins, elle peut exhiber des ondulations importantes sur les bords.

Une solution plus régulière est obtenue avec la méthode de Smith et Wessel (1990) (Smith, W. H. F. and Wessel, P., 1990, Gridding with continuous curvature splines in tension: Geophysics: 55, 293-305). La solution obtenue présente des variations de courbure plus faible.

A partir de cette méthode, deux variantes sont possibles. La première est appelée « résolution d'un système d'équations linéaires » (Wessel P. D. et Bercovici, 1998, Gridding with Splines in Tension : A Green function Approach, Math. Geol., 30, 77-93) et la deuxième « résolution par différence finie » (Smith W. H. F. and Wessel P., 1990, Gridding with continuous curvature splines in tension : Geophysics : 55, 293-305).

La méthode par résolution d'un système d'équations linéaires est bien adaptée lorsque le nombre de données à traiter est faible et lorsque l'étendue de la surface à interpoler est grande.

A l'inverse, la méthode par différence finie est mieux adaptée lorsque le nombre de données à traiter est important et lorsque la surface à interpoler est grande. Au début des itérations, on obtient les fréquences spatiales hautes. C'est ces fréquences qui deviennent accessibles pour les étapes de traitement qui suivent. Les plus basses fréquences sont obtenues à la fin si le temps de calcul est raisonnable.

Après le calcul d'interpolation 2D 3 par l'une ou l'autre des méthodes, on obtient un ensemble de données magnétométriques interpolées d'intensité B(x,y), référencées selon les référentiels x et y sur une carte d'interpolation 2D 4. L'ensemble des données magnétométriques interpolées forme une surface. Le pas de la carte est de 25 m dans l'exemple représenté sur les figures. Il peut être différents.

On peut ensuite appliquer deux traitements de données distincts à l'ensemble des données magnétométriques interpolées produisant deux cartes 2D distinctes. Ces deux méthodes consistent en des filtrages de Fourier.

La première méthode de traitement possible, représentée sur la figure 2 C), consiste à appliquer un calcul de réduction aux pôles 5 à l'ensemble des données magnétométriques interpolées d'intensité B(x,y) et plus précisément aux fréquences spatiales rendues accessibles durant le calcul d'interpolation 2D, comme dit plus haut.

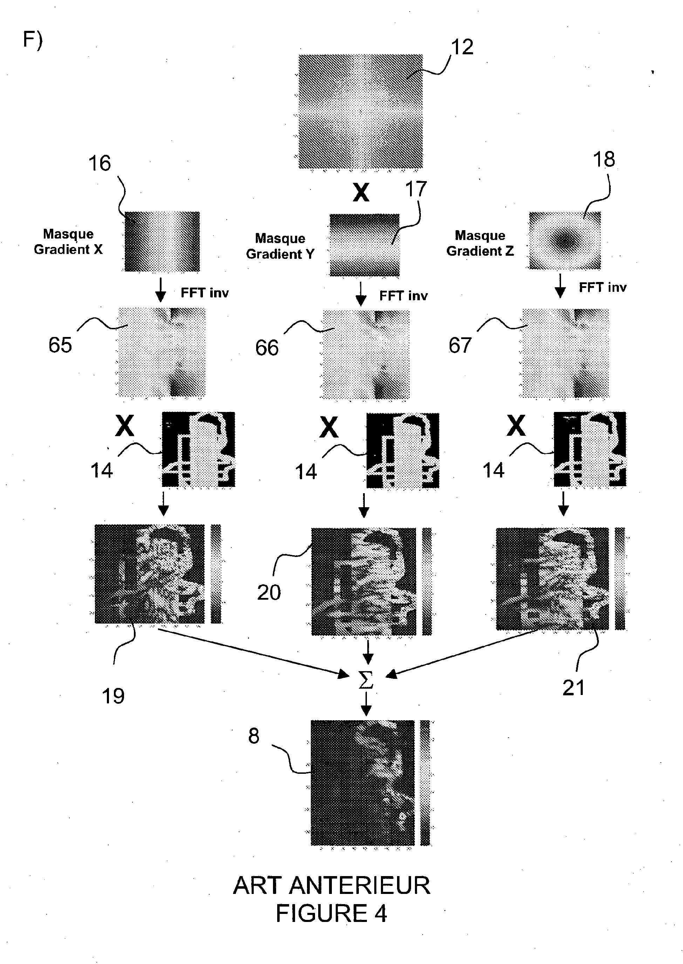

La deuxième méthode de traitement, représentée sur la figure 4, consiste à appliquer un calcul du signal analytique 7 à l'ensemble de données magnétométriques interpolées d'intensité B(x,y).

Ces deux méthodes de traitement peuvent être réalisées l'une sans l'autre.

Elles nécessitent au préalable plusieurs opérations de calcul communes.

On applique au préalable une opération d'expansion 9 (interpolation bilinéaire) à la carte d'interpolation 2D 4 (figure 2 B)) qui consiste à rendre cette carte périodique et continue sur les bords. Ceci est une des conditions nécessaires au calcul de la transformée de Fourier qui suit. Une autre des conditions était de combler les « trous » de la carte, ce qui a été effectué avec le calcul d'intérpolation 2D 3.

On applique ensuite un calcul de transformée de Fourier 11 à deux dimensions sur l'ensemble de la carte 2D étendue 10. On obtient une carte 2D représentant un ensemble de données dans le domaine de Fourier 12.

Pour le calcul de réduction aux pôles des fréquences spatiales rendues accessibles 5, on multiplie cet ensemble de données par un filtre complexe 13 dans le domaine de Fourier comme le montre la figure 2 C).

Le filtre complexe 13 est obtenu de la manière suivante :

- soit B(x,y) représentant l'ensemble des données magnétiques à une altitude z et FB(kx,ky) sa transformée de Fourier ;
- soit Brtp(x,y) représentant l'ensemble des données magnétiques réduites au pôle et FBrtp(kx,ky) sa transformée de Fourier;

La théorie montre que :

$$FBrtp(kx,ky) = FB(kx,ky) * Frtp(kx,ky) \quad (eq1)$$

Où Frtp représente la fonction de transfert du filtre complexe ;

$$Frtp(kx,ky) = 1/ ( [ sin(Ip) + i*cos(Ip)*sin( \theta + Dp) ] * [ sin(Io) + i*cos(Io)*sin( \theta + Do) ]) \quad (eq2)$$

Avec :

- Ip,Dp représentant l'inclinaison et la déclinaison du champ profond (terrestre) ;
- Io,Do représentant l'inclinaison et la déclinaison du champ de l'anomalie (induit + rémanent) ;
- $\theta$ représentant l'angle défini par les nombres d'ondes kx,ky tel que $\theta = atan(ky/kx)$ ;

On applique ensuite un calcul de transformée de Fourier 11 à deux dimensions sur l'ensemble de la carte 2D étendue 10. On obtient une carte 2D représentant un ensemble de données dans le domaine de Fourier 12.

On considère que le champ induit est dans la direction du champ terrestre et on néglige le champ rémanent qu'on ne connaît pas. On obtient donc Io=Ic=I et Do=Dc=D.

La formule de l'équation 2 n'est pas précise pour des latitudes inférieures 20°. En pratique pour régulariser cette formule, on remplace sin(Ip) par sin(Ia) pour | Ip|<|Ia|.

Compte tenu de ces remarques, la fonction de transfert du filtre complexe 13, d'après la formule (eq2), s'écrit alors :

$$Frtp(kx,ky) = 1/ ( [ sin(Ia) + i*cos(Ip)*sin( \theta + Dp) ] {}^\wedge 2) \quad (eq3)$$

Après multiplication de l'ensemble de données dans le domaine de Fourier par ce filtre complexe 13 et l'application d'une transformée de Fourier inverse à deux dimension, on obtient un ensemble de données magnétométriques réduites aux pôles B'(x,y) représenté sur une carte 2D de réduction aux pôles 6.

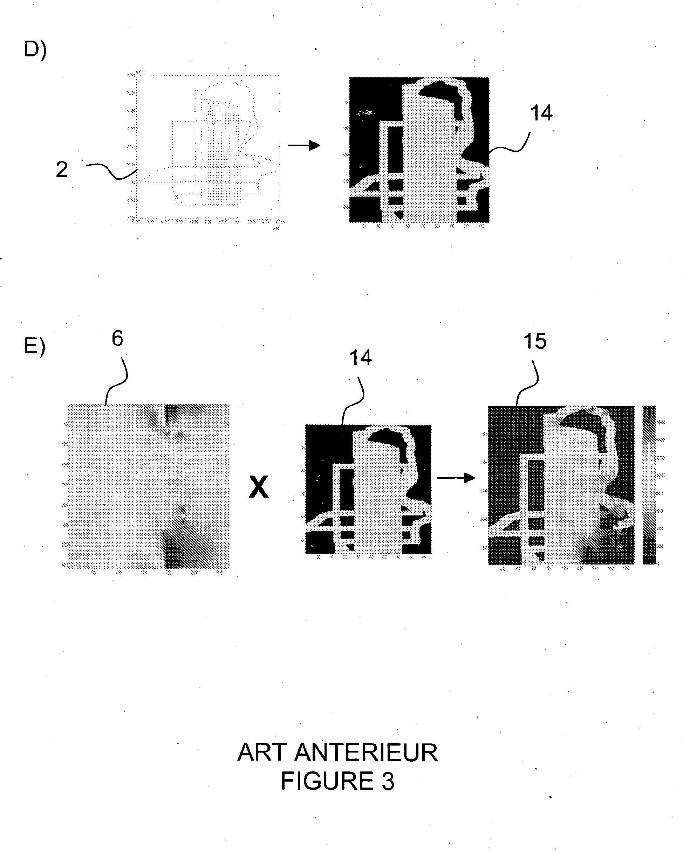

On applique un masque 14 sur la carte 2D de réduction aux pôles 6 afin de masquer les zones qui n'ont pas été réellement couvertes lors de la campagne de mesures. On obtient une carte 2D de réduction aux pôles 15 masquée, comme le montre la figure 3 E).

Comme représenté sur la figure 3 D), le masque 14 est obtenu à partir de la carte d'anomalies magnétiques complète 2. Le masque est une carte composée de 0 et de 1 au pas de la carte 2D de réduction aux pôles 6 qui est de 25 m dans cet exemple. Pour chaque point de mesure situé à la position x,y tous les points de la carte situés à un distance inférieur à un rayon maximum sont mis à 1. Dans cet exemple, le rayon maximum est de 5 fois le pas de la carte soit 125 m.

Après avoir obtenu la carte 2D représentant un ensemble de données du domaine de Fourier 12, il est également possible d'obtenir une carte 2D du signal analytique 8 grâce à une étape de calcul du signal analytique 7, représentée sur la figure 4 F).

Cette étape comprend une opération de multiplication par un filtre gradient X 16, une opération de multiplication par un filtre gradient Y 17, une opération de multiplication par un filtre gradient Z 18 appliquées dans le domaine de Fourier à l'ensemble de données du domaine de Fourier 12, chaque opération étant appliquée seule afin d'aboutir respectivement à trois cartes 65, 66, 67. Chacune de ces trois cartes 65, 66, 67 est ensuite multipliée par le masque 14 obtenu à partir de la carte d'anomalies magnétiques complète 2. On obtient trois cartes masquées, l'une de gradient X 19, une autre de gradient Y 20 et une troisième de gradient Z 21.

Les trois cartes 19, 20 et 21 sont ensuite composées de façon à générer une seule carte 2D du signal analytique 8 masquée.

Les fonctions de transfert dans le domaine de Fourier des filtres gradients sont obtenues de la manière qui suit.

Le champ magnétique mesuré est un champ de potentiel. On peut donc associer à ce champ un signal analytique construit à partir des ces dérivées. Par exemple avec le profil, le champ peut être décrit par une fonction B(x,z) dans 2 dimensions, avec x coordonnée le long du profil et z la profondeur. Les dérivées dB/dx et dB/dz (dz dirigé vers le bas) sont conjuguées harmoniques l'une de l'autre. Elles se déduisent l'une de l'autre par la transformée de Hilbert. Le signal complexe B"(x,z) = dB/dx + i dB/dz est donc un signal analytique.

A partir de modèles simples, on montre que le module du signal analytique présente des maxima à la verticale des sources magnétiques.

Cette propriété s'étend à 3 dimensions. Le champ s'exprime alors par B(x,y,z) et le signal complexe par [B"| = sqrt( Gx^2 + Gy^2 + Gz^2) (étape de composition), avec :

- Gx=dB/dx représentant le gradient en x du champ (carte 2D gradient X 19);
- Gy =dB/dy représentant le gradient en y du champ (carte 2D gradient Y 20) ;
- Gz- = dB/dz représentant le gradient en z du champ (dz < 0) (carte 2D gradient Z 21);

Dans le domaine de Fourier, les fonctions de transfert correspondantes sont :

- FGx(kx,ky)=2*pi*i*kx ;
- FGY(kx,ky)=2*pi*i*ky ;
- FGz-(kx,ky)=2*pi*sqrt(kx^2+ky^2) ;

Ce traitement analytique consiste en un filtre passe haut qui est donc très sensible au bruit. Il est possible d'appliquer, au préalable, un filtrage passe bas. Ce filtrage est réalisé par un filtre de prolongation vers le haut Gz+, qui a pour fonction de transfert FGz+= exp(- dz * k ).

Selon l'invention, la carte d'anomalies magnétiques 2 est une image géoréférencée, constituée d'une matrice de pixels élémentaires. A chaque pixel est attribuée une valeur unique calculée à partir de l'ensemble des mesures situées à l'intérieur de la zone géographique élémentaire représentée par le pixel.

La taille d'un pixel est un choix de l'utilisateur qui dépend de la taille des anomalies qu'il veut observer, de la puissance de calcul de l'unité centrale ainsi que de la fréquence de mesure du capteur magnétométrique. La fréquence de mesure du capteur utilisé pour l'acquisition des cartes des figures 1 à 10 se situe aux alentours de 10 Hz.

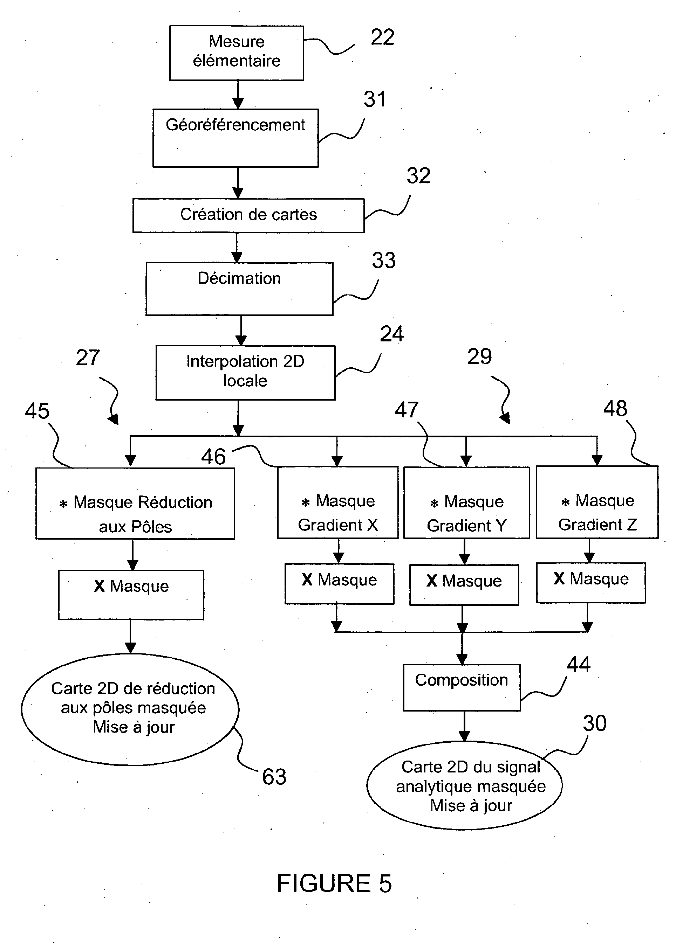

Le procédé d'acquisition et de traitement de données magnétométriques comprend une étape de mise à jour locale et en temps réel de la carte d'anomalies magnétiques par une étape de mesure élémentaire 22 de l'intensité du champ magnétique sur une zone géographique réduite, comme représenté sur la figure 5. On obtient une série élémentaire de données magnétométriques associée à un pixel mis à jour 23.

La série élémentaire de données magnétométriques correspond à un échantillon de mesures géoréférencées et située à l'intérieur d'un même pixel. Dès que le pixel 23 est mis à jour par la série élémentaire de données magnétométriques, les différentes étapes permettant d'obtenir les cartes 2D sont traitées simultanément.

La position géographique de chaque mesure est associée en temps réel à des données GPS en tenant compte des temps de réponse expérimentaux et instrumentaux. Les données GPS et les données magnétométriques sont datées avec la même horloge.

On applique une étape de création de cartes 32 à ces données géoréférencées en les disposant sur une carte référencée suivant les référentiels x et y. Cette carte présente un pas qui est de 25 m dans l'exemple qui va suivre. Cette carte est mise à jour dès qu'un pixel est mis à jour. Si c'est le premier pixel, la carte est créée en étant centrée sur la position géographique de ce premier pixel. Elle présente une taille par défaut de NxN points.

On applique une étape de décimation spatiale 33 sur ces données adaptée à la résolution de la carte. Elle consiste à attribuer une seule valeur d'intensité et une seule position pour chaque pixel de la carte. On obtient une carte d'anomalies magnétiques mise à jour 34.

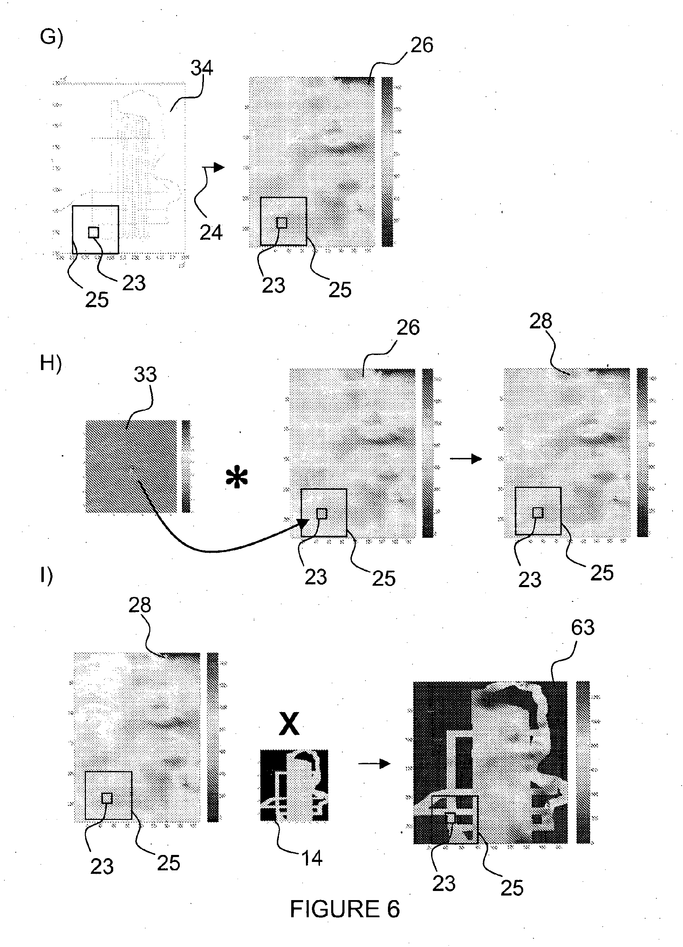

On applique une étape de mise à jour locale et en temps réel à la carte d'interpolation 2D 24 par l'application du calcul d'interpolation 2D au voisinage du pixel mis à jour 25, comme représenté sur la figure 6 G).

Pour cela, la méthode du minimum curvature a été modifiée.

Pour chacune des méthodes d'interpolation 2D, des variantes ont été développées pour accélérer le temps de traitement et pouvoir traiter de gros volumes de données.

Dans la méthode 1 (« résolution d'un système d'équations linéaires »), la surfacé à interpoler est prédécoupée en sous blocs qui se superposent partiellement. L'algorithme détermine dans chaque sous bloc la solution. Dans les zones de recouvrement la solution est obtenue par combinaison linéaire des solutions de chaque sous bloc.

Dans la méthode 2 (« résolution par différence finie »), comme dit plus haut, au début des itérations,' on obtient les fréquences hautes. Les plus basses sont obtenues à la fin. Pour converger plus vite, l'idée est donc de faire le traitement à plusieurs résolutions. L'algorithme calcule une solution sur la résolution basse et utilise cette solution comme point de départ pour les résolutions plus hautes. De plus l'image est aussi découpée en sous bloc qui se recouvrent partiellement (Webring M.,1981, MINC : A gridding program based on minimum curvature: U.S. Geological Survey Open-File Report p : 81-1224,41).

Pour le calcul d'interpolation 2D, on utilise préférentiellement la méthode 2 modifiée. L'ajout d'un nouveau point est essentiellement une modification locale. L'algorithme recherche la solution localement en résolvant l'équation aux différences finies par itérations successives au voisinage du pixel mis à jour 25 (Smith W. H. F.and Wessel P., 1990, Gridding with continuous curvature splines in tension: Geophysics: 55, 293-305).

Le mode opératoire est décrit ci-dessous. Le seul paramètre accessible par l'utilisateur est le pas de la carte.

Le premier pixel reçu fixe le centre de la carte dont la taille par défaut est 1024x1024 par exemple. Pour chaque nouvelle donnée, on calcule la coordonnée du pixel destinataire. Si ce pixel n'est pas vide, on met à jour sa nouvelle valeur par la méthode choisie (plus proche voisin, moyenne,...). On calcule également au fur et à la mesure la moyenne globale du champ.

Dès qu'un pixel 23 est mis à jour, l'algorithme de la méthode 2 est appliqué au voisinage 25 de ce pixel pour un nombre d'itérations fixé à l'avance Ni. La valeur moyenne calculée sert de valeur de départ pour les pixels vides. Pour cette méthode, la taille du voisinage 25 varie au cours des itérations. A chaque itération, le voisinage 25 est incrémenté d'une valeur fixe L.

On applique un masque de convolution sur les pixels à calculer, qui peut avoir, par exemple, une taille de 5x5 pixels.

L et Ni sont les deux seuls paramètres de l'algorithme qu'il faut ajuster en fonction de la taille de la carte choisie par l'opérateur et aussi en fonction de la taille des objets à analyser (nombre de pixels). Plus la taille des objets est grande, plus il faut augmenter ces paramètres. Une bonne estimation est de l'ordre de Ni x L > 2x taille des objets.

Par exemple, les valeurs Ni = 10 et L = 10 donnent de bons résultats pour les exemples représentés sur les figures.

L'algorithme converge de plus en plus rapidement au fur et à mesure que la carte se construit, puisque à chaque nouveau point, l'algorithme part d'une surface qui est déjà une bonne approximation de la solution, sauf pour les premiers points.

Si le temps de calcul est raisonnable lors de la reconstruction des fréquences hautes (25 ms par exemple sur une unité centrale équipée d'un pentium IV), il est éventuellement possible de faire de nouvelles itérations pour améliorer la reconstruction des fréquences basses.

La carte est automatiquement agrandie dès qu'une nouvelle mesure se situe en dehors d'une zone centrale de la carte définie par une taille de N/2xN/2 pixels.

L'étape de mise à jour locale et en temps réel de la carte d'interpolation 2D peut également être effectuée par tout autre type de méthode d'interpolation 2D locale comme par exemple la méthode du plus proche voisin, la méthode d'interpolation polynomiale, ou la méthode du spline (Estimation et interpolation spatiale : Méthodes déterministes et méthodes géostatistiques, Michel Arnaud et Xavier Emery, Hermes Science publications, Paris, 2000 ; Gridding of Geophysical Potential Fields from Noisy Scattered Data, Michael Rauth, Institut de météorologie et de géophysique de l'université de Vienne, These, 1998 ; Sambridge M., Braun J and McQueen H., 1995, Geophysical parameterisation and interpolation of irregular data using natural neighbours: Geophysical J. International, 122, 837-857 ; Akima H., 1970, A new method for interpolation and smooth curve fitting based on local procedures: J. Association Computing Machinery: 17, 589-602), sans se limiter.

On obtient ainsi des pixels mis à jour sur une carte d'interpolation 2D mise à jour 26.

Ensuite, on applique une étape de mise à jour locale et en temps réel de la carte 2D de réduction aux pôles 27 aux fréquences spatiales rendues accessibles par l'application à la carte d'interpolation 2D mise à jour 26 du calcul de réduction aux pôles pour le pixel mis à jour 23 et au voisinage du pixel mis à jour 25. Cette étape est représentée sur les figures 6 H) et 9.

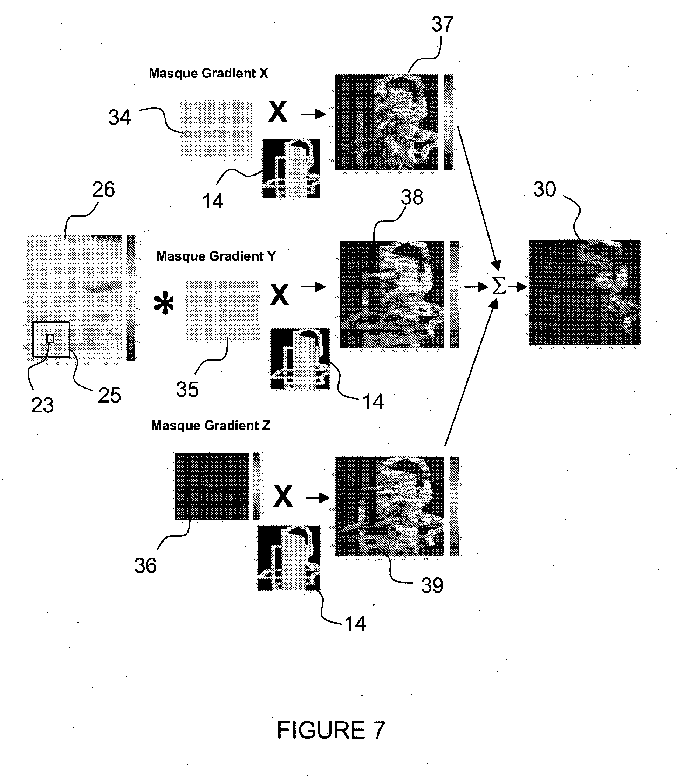

On applique également une étape de mise à jour locale et en temps réel de la carte 2D du signal analytique 29 par l'application à la carte d'interpolation 2D mise à jour 26 du calcul du signal analytique pour le pixel mis à jour 23 et au voisinage du pixel mis à jour 25, comme représenté sur les figures 7, 10 et 11.

La notion de fréquences spatiales rendues accessibles a été définie plus haut.

La dimension du voisinage du pixel mis à jour 25 est variable selon l'étape de traitement.

Pour ces deux étapes de mise à jour, deux méthodes sont possibles.

La première méthode consiste à appliquer un masque de convolution dans le domaine spatial sur le pixel mis à jour 23 et au voisinage du pixel mis à jour 25, sur les pixels non masqués de la carte d'interpolation 2D mise à jour 26. Cette opération est réalisée localement et en temps réel. La taille du voisinage 25 correspond à deux fois la taille du masque de convolution.

Concernant l'étape de mise à jour locale et en temps réel de la carte 2D de réduction aux pôles, on applique un masque réduction au pôle 33 à la carte d'interpolation 2D mise à jour 26 comme représenté sur la figure 6 H) et d'après la formule suivante :

$$B'(k,l)= \Sigma\ B(i,j)\ ^*\ M(k-i,l-j)\ ;$$

avec :

- B(i,j) représentant les pixels de la carte d'interpolation 2D mise à jour 26 ;
- B'(k,l) représentant les pixels de la carte de données magnétométriques réduites aux pôles mise à jour 28 ;
- et M(k-i,l-j) représentant le masque réduction au pôle.

On obtient des pixels mis à jour sur une carte de données magnétométriques réduites aux pôles mise à jour 28.

Le résultat de la figure 6 H) indique que la réduction au pôle par convolution permet de réduire les "hautes" fréquences (fréquences rendues accessibles) sans discontinuité.

On multiplie ensuite la carte de données magnétométriques réduites aux pôles mise à jour 28 par le masque 14, obtenu par la méthode représentée sur la figure 3 D). On obtient une carte de données magnétométriques réduites aux pôles masquée mise à jour 63. Cette étape est représentée sur la figure 6 I).

Sur les figures, la taille des masques, du pixel mis à jour 23 et du voisinage du pixel mis à jour 25 ne sont pas à l'échelle pour des raisons de représentation.

Pour les filtrages qui suivent, les masques de convolution 2D correspondants sont obtenus par transformée de Fourier inverse des réponses fréquentielles théoriques FB(kx,ky), définies plus haut. On limite ensuite leur support. On obtient la fonction M1(i,j) = FFTinv (FB(kx,ky)), avec i=[1:N], j[1:N] et N représentant la taille du support du masque.

Il est éventuellement possible de multiplier le masque par une fenêtre d'apodisation.

La dimension du masque est déterminée par l'étendu spatiale du filtre. Dans le cas où le filtre théorique a une moyenne nulle, il est important de conserver cette propriété sur le masque. Il faut donc mettre à 0 la valeur moyenne si la moyenne théorique est nulle. On obtient le masque suivant M(i,j) = M1(i,j) - <M1 (i,j)>.

La taille du support, sur lequel le masque de réduction au pôle 33 est appliqué, est de NxN pixels, avec N >64. Dans l'exemple de la figure 6 H), la taille du masque 33 est de 64x64.

La taille indiquée ci-dessus est une taille minimum. Le choix de la taille des masques est fonction également du pas d'échantillonnage de la carte d'anomalie et de la taille des objets que l'on veut observer. Si D est la taille max des objets (le voisinage du pixel modifié 25) que l'on souhaite analyser et dX le pas d'échantillonnage de la carte, il faut aussi prendre N tel que N*dx > D.

Concernant, l'étape de mise à jour locale et en temps réel de la carte 2D du signal analytique, on applique un masque de convolution gradient X 34 puis le masque 14 à la carte d'interpolation 2D mise à jour 26 dans le domaine spatial. On obtient une sous image filtrée selon le référentiel X 37, représentée sur la figure 7.

On applique un masque de convolution gradient Y 35 puis le masque 14 à la carte d'interpolation 2D mise à jour 26 dans le domaine spatial. On obtient une sous image filtrée selon le référentiel Y 38.

On applique un masque de convolution gradient Z 36 puis le masque 14 à la carte d'interpolation 2D mise à jour 26 dans le domaine spatial. On obtient une sous image filtrée selon le référentiel Z 39.

Ces masques de convolution 34, 35, 36 et le masque 14 sont appliqués une seule fois à chaque carte d'interpolation 2D mise à jour 26 de façon à obtenir trois sous images filtrées 37, 38 et 39.

On applique ensuite une étape de composition 44 aux trois sous images filtrées 37, 38 et 39 de façon à obtenir des pixels sur une carte de données magnétométriques analytiques mise à jour 30.

La taille du support des masques Gradient X 34 et Y 35 est de Nx1 et 1xN respectivement avec N > 32. La taille du support du masque Gradient Z 36 est de NxN avec N >= 11. Dans l'exemple de la figure 7, la taille des masques 34, 35, 36 est de 64x64 pixels.

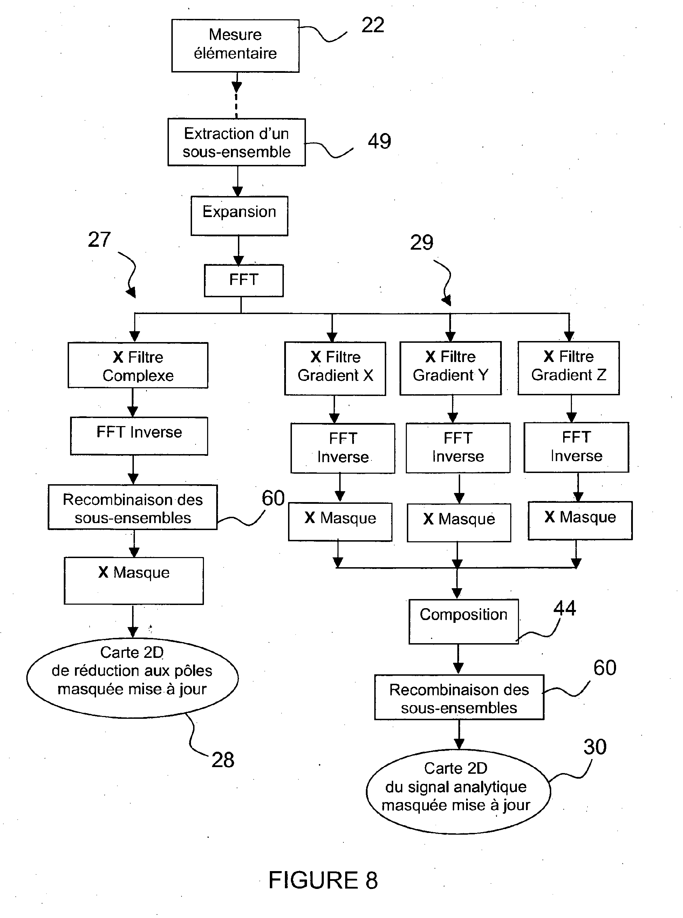

La deuxième méthode de mise à jour des cartes 2D, représentée sur la figure 8, consiste à extraire et traiter des sous-ensembles de la carte d'interpolation 2D mise à jour 26. La carte d'interpolation 2D 26 est découpée en sous-ensembles de taille maximale 1024x1024 par exemple. Cette méthode permet le traitement de cartes de grande dimension.

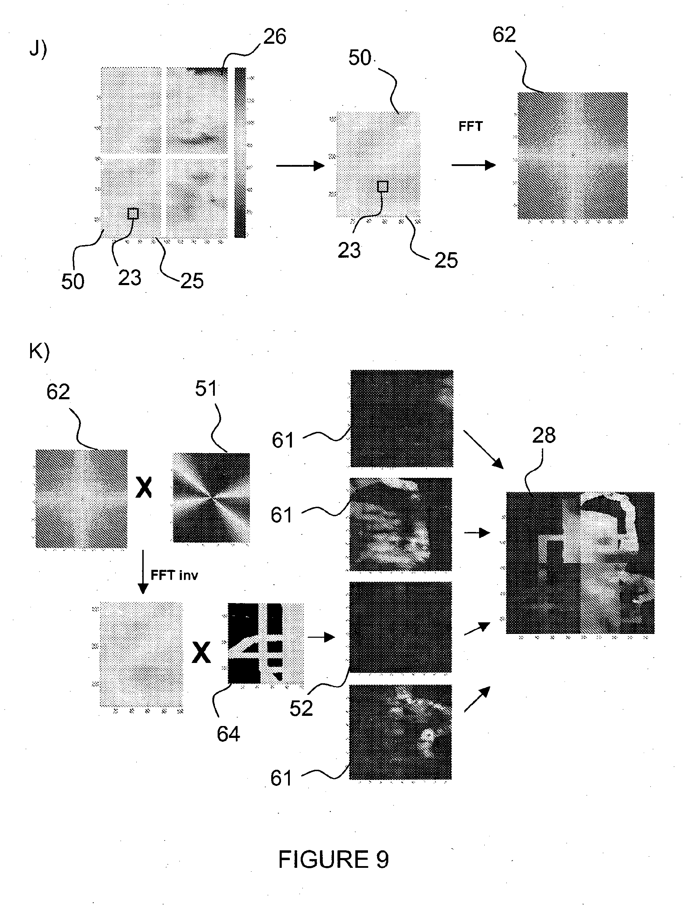

Elle permet également de traiter ces cartes en temps réel. Dès qu'un nouveau bloc de points de mesure est acquis et qu'un pixel de la carte d'interpolation 2D est mis à jour, un sous-ensemble à traiter 50 de taille max 1024x1024 pixels, centré sur le pixel mis à jour 23, est extrait puis traité par filtrage de Fourier, comme représenté sur la figure 9 J). Cette extraction est également paramétrée par un facteur de recouvrement entre les sous-ensembles.

Le sous-ensemble à traiter 50 comporte le pixel mis à jour 23 et le voisinage du pixel mis à jour 25. La taille du sous-ensemble à traiter 50 correspond à la taille du voisinage du pixel mis à jour 25.

Les étapes de traitement, ci-dessous, permettant des mises à jour locales et en temps réel, sont appliquées uniquement au sous-ensemble à traiter 50.

On applique au préalable une opération d'expansion, décrite plus haut, au sous-ensemble à traiter 50. Cette opération est suivie d'un calcul de transformée de Fourier à deux dimensions. On obtient un sous-ensemble à traiter dans le domaine de Fourier 62.

On applique une étape de mise à jour locale et en temps réel de la carte 2D de réduction aux pôles 27 au sous-ensemble à traiter dans le domaine de Fourier 62, comme le montre la figure 9K). Cette étape est appliquée aux fréquences rendues accessibles par le calcul d'interpolation 2D.

L'étape de mise à jour locale et en temps réel de la carte 2D de réduction aux pôles 27 comprend une opération de multiplication par un filtre complexe 51, obtenu par la méthode décrite plus haut. Ce filtre complexe 51 est appliqué dans le domaine de Fourier au sous-ensemble à traiter 50. Cette opération est suivie d'une transformation de Fourier inverse à deux dimensions puis d'une multiplication par un sous-masque 64 correspondant à ¼ du masque 14 pour l'exemple de la figure 9. Plus précisément, le sous-masque 64 correspond à la zone représentée par le sous-ensemble à traiter 50. Il est obtenu en découpant et en extrayant cette zone à partir du masque 14. On obtient un sous-ensemble traité 52. Ce sous-ensemble traité 52 est masqué.

On applique une étape de recombinaison 60 du sous-ensemble traité 52 avec le reste des sous-ensembles 61 qui sont également masqués. On obtient la carte de données magnétométriques réduites aux pôles mise à jour 28.

Le résultat illustré sur la figure 9 K) montre qu'il y a discontinuité entre les niveaux des sous-ensembles et que ces discontinuités ne se résument pas à un décalage constant des niveaux. La réduction au pôle altère également un ensemble de fréquences basses.

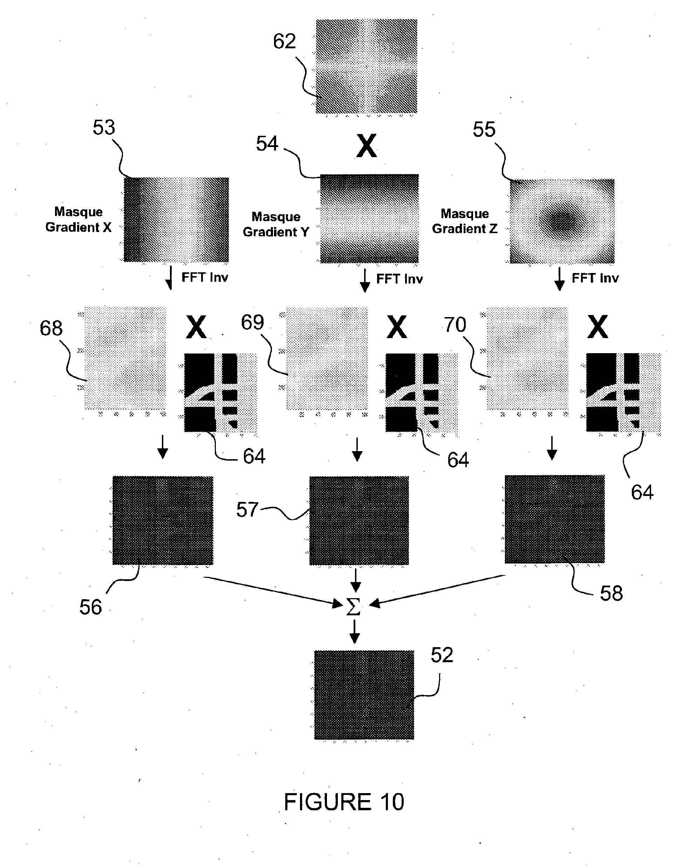

Quant à l'étape de mise à jour locale et en temps réel de la carte 2D du signal analytique 29, représentées sur la figure 10, elle comprend une opération de multiplication par un filtre gradient X 53, une opération de multiplication par un filtre gradient Y 54 et une opération de multiplication par un filtre gradient Z 55 appliquées dans le domaine de Fourier au sous-ensemble à traiter 50. Chaque opération est appliquée seule afin d'aboutir à trois cartes dans le domaine de Fourier.

Chaque opération de multiplication est suivie d'un traitement de transformée de Fourier inverse à deux dimensions appliqué à chacune de ces cartes de façon à obtenir trois cartes dans le domaine spatial 68, 69, 70. Ces trois cartes dans le domaine spatial 68, 69, 70 sont ensuite multipliées par le sous-masque 64.

On obtient trois cartes masquées, l'une de gradient X 56, une autre de gradient Y 57 et la troisième de gradient Z 58.

Ces trois cartes 56, 57 et 58 sont composées de façon à générer un seul sous-ensemble traité 52.

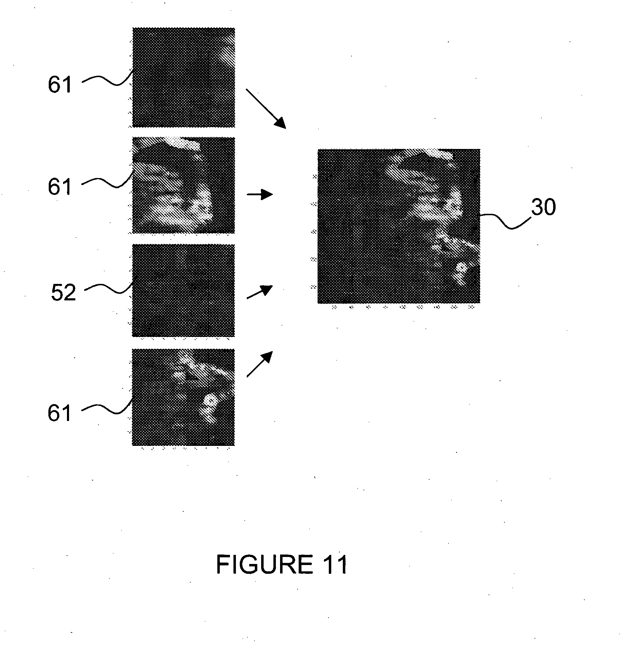

On applique ensuite une étape de recombinaison 60 du sous-ensemble traité 52 avec le reste des sous-ensembles 61, comme représentée sur la figure 11. On obtient la carte 2D du signal analytique mise à jour 30.

Ce résultat montre qu'il n'y a pas, dans ce cas, de discontinuité entre les sous-images. Ceci est du au fait que le calcul du signal analytique est un filtre passe haut. Des effets de bords peuvent apparaître si le facteur de recouvrement est trop petit. Ce facteur n'a pas besoin d'être important (~10%). L'erreur maximale est alors inférieure à 1%.

Quelle que soit la méthode de mise à jour locale, on peut appliquer une opération de multirésolution entre l'étape d'interpolation 2D et l'une ou l'autre des étapes de mise à jour locale et en temps réel de la carte 2D de réduction aux pôles 27 ou de la carte 2D du signal analytique 29. On produit simultanément plusieurs cartes à plusieurs résolutions afin d'accélérer la convergence sur les fréquences basses.

Il est également possible d'appliquer une déconvolution d'Euler (Reid et al, 1990, Magnetic interpretation it three dimensions using Euler deconvolution, Geophysics, 55, p 80-91 ; M.F. Mushayandebvu, V. Lesur, A.B. Reid and J.D FairHead, Grid Euler Deconvolution with constraints for 2D structure, Geophysics, Vol 69 , N°2, 2004, pp 489-496) sur la carte 2D du signal analytique mise à jour 30. Cette opération est réalisée localement pour le pixel mis à jour 23 et au voisinage dudit pixel mis à jour 25 de façon à permettre le calcul de l'indice des sources magnétiques en temps réel. On accède ainsi à une reconnaissance de « cibles » en temps réel.

Cette déconvolution permet également le référencement des sources magnétiques selon le référentiel z. On peut alors estimer en temps réel la profondeur des sources lors des mesures.

Ces traitements de données magnétométriques peuvent être associés à des commandes d'automates.

Par exemple, ils peuvent commander un voyant rouge signalant la présence de sources magnétiques en temps réel sur un navire.

L'invention concerne également un dispositif d'acquisition et de traitement de données magnétométriques pour la production d'une carte à au moins deux dimensions de caractéristiques magnétométriques d'une zone géographique.

Il comprend un moyen de mesure de données magnétométriques qui produit un signal formant une carte d'anomalies magnétiques. Il comprend une unité de traitement du signal produisant une carte 2D de réduction aux pôles et une carte 2D du signal analytique.

Selon l'invention, l'unité de traitement met en oeuvre, localement et en temps réel, le procédé d'acquisition et de traitement de données magnétométriques décrits ci-dessus.

Le moyen de mesure de données magnétométriques peut être un capteur magnétométrique permettant de générer des données magnétométriques d'intensité B(s).

Il peut comprendre plusieurs capteurs scalaires de manière à mesurer le gradient d'intensité du champ magnétique selon une ou plusieurs directions.

Il peut comprendre un capteur magnétométrique vectoriel permettant de générer des données magnétométriques vectorielles Bx(s), By(s) et Bz(s) qui représentent les trois composantes du champ magnétique. Ces composantes permettent de reconstituer le signal scalaire B(s). Le traitement des données peut être simplifié car il est possible de calculer directement des données de gradient à partir de ces composantes.

Le moyen de mesure de données magnétométriques peut être avantageusement un gradiomètre du type de ceux qui permettent de générer directement des données de gradient d'au moins une des composantes du tenseur gradient du champ Gx ou Gy ou Gz.

On peut utiliser avantageusement un gradiomètre permettant de générer des données de gradient d'au moins une des composantes du tenseur gradient du champ Gx ou Gy ou Gz et également des données magnétométriques d'intensité B(s).

Dans une variante possible, on peut avantageusement utiliser un gradiomètre permettant de générer des données de gradient d'au moins une des composantes du tenseur gradient du champ Gx ou Gy ou Gz et des données magnétométriques vectorielles Bx(s), By(s) et Bz(s).

L'obtention directe par le moyen de mesure, des données de gradient, permet de gagner du temps de calcul et de la précision sur les données.

Ainsi, l'invention propose un procédé d'acquisition et de traitement de données magnétométriques local, ce qui permet d'analyser les résultats affichés sur les cartes 2D en temps réel, lors de la campagne de mesures.

L'invention permet un gain de temps considérable et une réaction sur lé terrain en temps réel. Un container ou une mine en pleine mer peuvent être localisées et retirées aussitôt.

## Revendications

1. Procédé d'acquisition et de traitement de données magnétométriques pour la représentation sur une carte à au moins deux dimensions de caractéristiques magnétométriques d'une zone géographique comprenant :

   - une étape de mesure de l'intensité du champ magnétique (1) sur une zone géographique produisant un ensemble de données magnétométriques d'intensité B(s) formant une carte d'anomalies magnétiques (2), s représentant l'abscisse curviligne le long de la trajectoire du levé,
   - une étape de calcul d'interpolation 2D (3) appliquée à l'ensemble de données magnétométriques d'intensité B(s) produisant un ensemble de données magnétométriques interpolées d'intensité B(x,y) référencées selon les référentiels x et y sur une carte d'interpolation 2D (4),
   - une étape de calcul de réduction aux pôles (5) appliquée à l'ensemble de données magnétométriques interpolées d'intensité B(x,y) produisant un ensemble de données magnétométriques réduites aux pôles B'(x,y) représenté sur une carte 2D de réduction aux pôles (6),
   - une étape de calcul du signal analytique (7) appliquée à l'ensemble de données magnétométriques interpolées d'intensité B(x,y) produisant un ensemble de données magnétométriques analytiques B"(x,y) représenté sur une carte 2D du signal analytique (8),

   **caractérisé en ce qu'**il comprend :

   - un découpage de la carte d'anomalies magnétiques (2) en une matrice de pixels,
   - une étape de mise à jour locale et en temps réel de la carte d'anomalies magnétiques par une étape de mesure élémentaire (22) de l'intensité du champ magnétique sur une zone géographique réduite produisant une série élémentaire de données magnétométriques associée à un pixel mis à jour (23),
   - une étape de mise à jour locale et en temps réel de la carte d'interpolation 2D (24) par l'application du calcul d'interpolation 2D au voisinage du pixel mis à jour (25), produisant des pixels sur une carte d'interpolation 2D mise à jour (26),
   - étape de mise à jour locale et en temps réel de la carte 2D de réduction aux pôles (27) par l'application à la carte d'interpolation 2D mise à jour (26) du calcul de réduction aux pôles pour le pixel mis à jour (23) et au voisinage dudit pixel mis à jour (25), produisant des pixels sur une carte de données magnétométriques réduites aux pôles mise à jour (28),
   - une étape de mise à jour locale et en temps réel de la carte 2D du signal analytique (29) par l'application à la carte d'interpolation 2D mise à jour (26) du calcul du signal analytique pour le pixel mis à jour (23) et au voisinage dudit pixel mis à jour (25), produisant des pixels sur une carte de données magnétométriques analytiques mise à jour (30).

2. Procédé d'acquisition et de traitement de données magnétométriques selon la revendication 1, **caractérisé en ce que** l'étape de mise à jour locale et en temps réel de la carte d'interpolation 2D (24) comprend un calcul du type minimum curvature.

3. Procédé d'acquisition et de traitement de données magnétométriques selon la revendication 1 ou 2, **caractérisé en ce que** l'étape de mise à jour locale et en temps réel de la carte 2D de réduction aux pôles (27) comprend une étape d'application d'un masque de convolution (45) dans le domaine spatial.

4. Procédé d'acquisition et de traitement de données magnétométriques selon la revendication 1 ou 2, **caractérisé en ce que** l'étape de mise à jour locale et en temps réel de la carte 2D du signal analytique (29) comprend :

- une étape d'application d'un masque de convolution gradient X (46) dans e domaine spatial produisant une sous image filtrée selon le référentiel X (37),
- une étape d'application d'un masque de convolution gradient Y (47) dans le domaine spatial produisant une sous image filtrée selon le référentiel Y (38),
- une étape d'application d'un masque de convolution gradient Z (48) dans le domaine spatial produisant une sous image filtrée selon le référentiel Z (39),
- une étape de composition des sous images filtrées selon les référentiels X, Y et Z (44).

5. Procédé d'acquisition et de traitement de données magnétométriques selon la revendication 1 ou 2, **caractérisé en ce qu'**il comprend une étape d'extraction (49) d'un sous-ensemble à traiter (50) de la carte d'interpolation 2D mise à jour (26), le sous-ensemble à traiter (50) comportant le pixel mis à jour (23) et le voisinage dudit pixel mis à jour (25).

6. Procédé d'acquisition et de traitement de données magnétométriques selon la revendication 5, **caractérisé en ce que** les étapes de mise à jour locale et en temps réel de la carte 2D de rédaction aux pôles (27) et de la carte 2D du signal analytique (29) sont appliquées uniquement au sous-ensemble à traiter (50).

7. Procédé d'acquisition et de traitement de données magnétométriques selon la revendication 6, **caractérisé en ce que** l'étape de mise à jour locale et en temps réel de la carte 2D de réduction aux pôles (27) comprend une opération de multiplication par un filtre complexe (51) appliquée dans le domaine de Fourier au sous-ensemble à traiter (50) générant un sous-ensemble traité (52).

8. Procédé d'acquisition et de traitement de données magnétométriques selon la revendication 6, **caractérisé en ce que** :

- l'étape de mise à jour locale et en temps réel de la carte 2D du signal analytique (29) comprend une opération de multiplication par un filtre gradient X (53), une opération de multiplication par un filtre gradient Y (54), une opération de multiplication par un filtre gradient Z (55) appliquées dans le domaine de Fourier au sous-ensemble à traiter (50), chaque opération étant appliquée seule afin d'aboutir à trois cartes, l'une de gradient X (56), une autre de gradient Y (57), et la troisième de gradient Z (58),
- les trois cartes (56, 57, 58) sont composées de façon à générer un seul sous-ensemble traité (52).

9. Procédé d'acquisition et de traitement de données magnétométriques selon la revendication 7 ou 8, **caractérisé en ce que** les étapes de mise à jour locale et en temps réel de la carte 2D de réduction aux pôles (27) et de la carte 2D du signal analytique (29) comprennent une étape de recombinaison (60) du sous-ensemble traité (52) avec le reste des sous-ensembles (61).

10. Procédé d'acquisition et de traitement de données magnétométriques selon l'une quelconque des revendications 1 à 9, **caractérisé en ce qu'**une déconvolution d'Euler est appliquée, localement et en temps réel, au pixel mis à jour (23) et au voisinage dudit pixel mis à jour (25) sur la carte 2D du signal analytique mise à jour (30) de façon à permettre le référencement des sources magnétiques selon le référentiel z.

11. Procédé d'acquisition et de traitement de données magnétométriques selon l'une quelconque des revendications 1 à 9, **caractérisé en ce qu'**une déconvolution d'Euler est appliquée, localement et en temps réel, au pixel mis à jour (23) et au voisinage dudit pixel mis à jour (25) sur la carte 2D du signal analytique mise à jour (30) de façon à permettre le calcul de l'indice des sources magnétiques générant les pixels de données magnétométriques analytiques.

12. Dispositif d'acquisition et de traitement de données magnétométriques pour la production d'une carte à au moins deux dimensions de caractéristiques magnétométriques d'une zone géographique comprenant un moyen de mesure de données magnétométriques produisant un signal formant une carte d'anomalies magnétiques, une unité de traitement dudit signal produisant une carte 2D de réduction aux pôles et une carte 2D du signal analytique **caractérisé en ce que** l'unité de traitement met en oeuvre, localement et en temps réel, le procédé de l'une quelconque des revendications 1 à 11.

**13.** Dispositif d'acquisition et de traitement de données magnétométriques selon la revendication 12, **caractérisé en ce que** le moyen de mesure de données magnétométriques comprend au moins un capteur magnétométrique scalaire.

**14.** Dispositif d'acquisition et de traitement de données magnétométriques selon la revendication 12, **caractérisé en ce que** le moyen de mesure de données magnétométriques est un capteur magnétométrique vectoriel apte à générer des données magnétométriques vectorielles Bx(s), By(s) et Bz(s), Bx(s), By(s) et Bz(s) étant les trois composantes du champ magnétique B(s).

**15.** Dispositif d'acquisition et de traitement de données magnétométriques selon la revendication 12, **caractérisé en ce que** le moyen de mesure de données magnétométriques est un gradiomètre apte à générer des données de gradient d'au moins une des composantes du tenseur gradient du champ Gx ou Gy ou Gz.

**16.** Dispositif d'acquisition et de traitement de données magnétométriques selon la revendication 15, **caractérisé en ce que** le moyen de mesure de données magnétométriques est un gradiomètre apte à générer des données de gradient d'au moins une des composantes du tenseur gradient du champ Gx ou Gy ou Gz et des données magnétométriques d'intensité B(s).

**17.** Dispositif d'acquisition et de traitement de données magnétométriques selon la revendication 15, **caractérisé en ce que** e moyen de mesure de données magnétométriques est un gradiomètre apte à générer des données de gradient d'au moins une des composantes du tenseur gradient du champ Gx ou Gy ou Gz et des données magnétométriques vectorielles Bx(s), By(s) et Bz(s).

**Patentansprüche**

**1.** Verfahren zur Aufnahme und Bearbeitung magnetometrischer Daten für die Darstellung mindestens zweier Dimensionen mit magnetometrischen Merkmalen einer geographischen Zone auf einer Karte, umfassend:

- einen Schritt des Messens der Stärke des Magnetfeldes (1) in einer geographischen Zone, der eine Gesamtheit von magnetometrischen Daten der Stärke B(s) erzeugt, die eine Karte von magnetischen Anomalien (2) bilden, wobei s die gekrümmte Abszisse entlang der Bahn der Aufnahme darstellt,
- einen Schritt der Interpolationsrechnung 2D (3), der für die Gesamtheit von magnetometrischen Daten der Stärke B(s) angewandt wird, der eine Gesamtheit von interpolierten magnetometrischen Daten der Stärke B(x, y) erzeugt, die nach dem Bezugssystem x und y auf einer Interpolationskarte 2D(4) bezeichnet sind,
- einen Schritt der Reduktionsrechnung an den Polen (5), der für die Gesamtheit von interpolierten magnetometrischen Daten der Stärke B(x,y) angewandt wird, der eine Gesamtheit von reduzierten magnetometrischen Daten an den Polen B'(x,y) erzeugt, dargestellt auf einer Reduktionskarte 2D an den Polen (6),
- einen Schritt der Berechnung des analytischen Signals (7), der für die Gesamtheit von interpolierten magnetometrischen Daten der Stärke B(x,y) angewandt wird, der eine Gesamtheit von analytischen magnetometrischen Daten B"(x,y) erzeugt, dargestellt auf einer Karte 2D des analytischen Signals (8),

**dadurch gekennzeichnet, dass** es Folgendes umfasst:

- ein Schneiden der Karte von magnetischen Anomalien (2) in eine Pixelmatrix,
- einen Schritt der lokalen Echtzeitaktualisierung der Karte von magnetischen Anomalien durch einen Schritt des elementaren Messens (22) der Stärke des Magnetfeldes in einer reduzierten geographischen Zone, der eine elementare Reihe von magnetometrischen Daten in Verbindung mit einem aktualisierten Pixel (23) erzeugt,
- einen Schritt der lokalen Echtzeitaktualisierung der Interpolationskarte 2D (24) durch die Anwendung einer Interpolationsrechnung 2D in der Nähe des aktualisierten Pixels (25), die Pixel auf einer aktualisierten Interpolationskarte 2D (26) erzeugt,
- einen Schritt der lokalen Echtzeitaktualisierung der Reduktionskarte 2D an den Polen (27) durch Anwendung an der aktualisierten Interpolationskarte 2D (26) der Reduktionsrechnung an den Polen für das aktualisierte Pixel (23) und in der Nähe des aktualisierten Pixels (25), die Pixel auf einer aktualisierten Karte (28) von reduzierten magnetometrischen Daten an den Polen erzeugt,
- einen Schritt der lokalen Echtzeitaktualisierung der Karte 2D des analytischen Signals (29) durch Anwendung an der aktualisierten Interpolationskarte 2D (26) der Berechnung des analytischen Signals für das aktualisierte Pixel (23) und in der Nähe des aktualisierten Pixels (25), die Pixel auf einer aktualisierten Karte von analytischen magnetometrischen Daten (30) erzeugt.

2.  Verfahren zur Aufnahme und Bearbeitung magnetometrischer Daten nach Anspruch 1, **dadurch gekennzeichnet, dass** der Schritt der lokalen Echtzeitakfiualisierung der Interpolationskarte 2D (24) eine Berechnung vom Typ Krümmungsminimum umfasst.

3.  Verfahren zur Aufnahme und Bearbeitung magnetometrischer Daten nach Anspruch 1 oder 2, **dadurch gekennzeichnet, dass** der Schritt der lokalen Echtzeitaktualisierung der Reduktionskarte 2D an den Polen (27) einen Schritt der Anwendung einer Konvolutionsmaske (45) im Raumbereich umfasst.

4.  Verfahren zur Aufnahme und Bearbeitung magnetometrischer Daten nach Anspruch 1 oder 2, **dadurch gekennzeichnet, dass** der Schritt der lokalen Echtzeitaktualisierung der Karte 2D des analytischen Signals (29) Folgendes umfasst:

    - einen Schritt der Anwendung einer Gradientenkonvolutionsmaske X (46) im Raumbereich, der ein gefiltertes Unterbild gemäß dem Bezugssystem X (37) erzeugt,
    - einen Schritt der Anwendung einer Gradientenkonvolutionsmaske Y (47) im Raumbereich, der ein gefiltertes Unterbild gemäß dem Bezugssystem Y (38) erzeugt,
    - einen Schritt der Anwendung einer Gradientenkonvolutionsmaske Z (48) im Raumbereich, der ein gefiltertes Unterbild gemäß dem Bezugssystem Z (39) erzeugt,
    - einen Schritt der Zusammensetzung der gefilterten Unterbilder gemäß den Bezugssystemen X, Y und Z (44).

5.  Verfahren zur Aufnahme und Bearbeitung magnetometrischer Daten nach Anspruch 1 oder 2, **dadurch gekennzeichnet, dass** es einen Schritt der Extraktion (49) der aktualisierten Interpolationskarte 2D (26) aus einer zu bearbeitenden Untereinheit (50) umfasst, wobei die zu bearbeitende Untereinheit (50) das aktualisierte Pixel (23) und die Umgebung des aktualisierten Pixels (25) umfasst.

6.  Verfahren zur Aufnahme und Bearbeitung magnetometrischer Daten nach Anspruch 5, **dadurch gekennzeichnet, dass** die Schritte der lokalen Echtzeitaktualisierung der Reduktionskarte 2D an den Polen (27) und der Karte 2D des analytischen Signals (29) nur an der zu bearbeitenden Untereinheit (50) angewandt werden.

7.  Verfahren zur Aufnahme und Bearbeitung magnetometrischer Daten nach Anspruch 6, **dadurch gekennzeichnet, dass** der Schritt der lokalen Echtzeitaktualisierung der Reduktionskarte 2D an den Polen (27) einen Schritt der Multiplikation durch einen komplexen Filter (51) umfasst, der im Fourier-Bereich an der zu bearbeitenden Untereinheit (50) angewandt wird und zur Erzeugung einer bearbeiteten Untereinheit (52) führt.

8.  Verfahren zur Aufnahme und Bearbeitung magnetometrischer Daten nach Anspruch 6, **dadurch gekennzeichnet, dass**:

    - der Schritt der lokalen Echtzeitaktualisierung der Karte 2D des analytischen Signals (29) einen Multiplikationsvorgang durch einen Gradientenfilter X (53), einen Multiplikationsvorgang durch einen Gradientenfilter Y (54), einen Multiplikationsvorgang durch einen Gradientenfilter Z (55) umfasst, die im Fourier-Bereich an der zu bearbeitenden Untereinheit (50) angewandt werden, wobei jeder Vorgang alleine angewandt wird, um zu drei Karten zu gelangen, einer mit dem Gradienten X (56), einer weiteren mit dem Gradienten Y (57) und der dritten mit dem Gradienten Z (58),
    - die drei Karten (56, 57, 58) derart zusammengesetzt werden, dass sie eine einzige bearbeitete Untereinheit (52) erzeugen.

9.  Verfahren zur Aufnahme und Bearbeitung magnetometrischer Daten nach Anspruch 7 oder 8, **dadurch gekennzeichnet, dass** die Schritte der lokalen Echtzeitaktualisierung der Reduktionskarte 2D an den Polen (27) und der Karte 2D des analytischen Signals (29) einen Schritt der Rekombination (60) der bearbeiteten Untereinheit (52) mit den übrigen Untereinheiten (61) umfassen.

10.  Verfahren zur Aufnahme und Bearbeitung magnetometrischer Daten nach einem der Ansprüche 1 bis 9, **dadurch**

**gekennzeichnet, dass** eine Euler-Dekonvolution lokal und in Echtzeit an dem aktualisierten Pixel (23) und in der Nähe des aktualisierten Pixels (25) auf der Karte 2D des aktualisierten analytischen Signals (30) angewandt wird, um die Bezeichnung der magnetischen Quellen nach dem Bezugssystem Z zu ermöglichen.

11. Verfahren zur Aufnahme und Bearbeitung magnetometrischer Daten nach einem der Ansprüche 1 bis 9, **dadurch gekennzeichnet, dass** eine Euler-Dekonvolution lokal und in Echtzeit an dem aktualisierten Pixel (23) und in der Nähe des aktualisierten Pixels (25) auf der Karte 2D des aktualisierten analytischen Signals (30) angewandt wird, um die Berechnung des Indexes der magnetischen Quellen, die die analytischen magnetometrischen Datenpixel erzeugen, zu ermöglichen.

12. Vorrichtung zur Aufnahme und Bearbeitung magnetometrischer Daten für die Erzeugung einer Karte mit mindestens zwei Dimensionen von magnetometrischen Merkmalen einer geographischen Zone, umfassend ein Mittel zum Messen von magnetometrischen Daten, das ein Signal erzeugt, das eine Karte von magnetischen Anomalien bildet, eine Einheit zur Bearbeitung des Signals, die eine Reduktionskarte 2D an den Polen und eine Karte 2D des analytischen Signals erzeugt, **dadurch gekennzeichnet, dass** die Bearbeitungseinheit lokal und in Echtzeit das Verfahren nach einem der Ansprüche 1 bis 11 einsetzt.

13. Vorrichtung zur Aufnahme und Bearbeitung magnetometrischer Daten nach Anspruch 12, **dadurch gekennzeichnet, dass** das Mittel zum Messen von magnetometrischen Daten mindestens einen skalaren magnetometrischen Sensor umfasst.

14. Vorrichtung zur Aufnahme und Bearbeitung magnetometrischer Daten nach Anspruch 12, **dadurch gekennzeichnet, dass** das Mittel zum Messen von magnetometrischen Daten ein vektorieller magnetometrischer Sensor ist, der geeignet ist, vektorielle magnetometrische Daten Bx(s), By(s) und Bz(s) zu erzeugen, wobei Bx(s), By(s) und Bz(s) die drei Komponenten des Magnetfeldes B(s) sind.

15. Vorrichtung zur Aufnahme und Bearbeitung magnetometrischer Daten nach Anspruch 12, **dadurch gekennzeichnet, dass** das Mittel zum Messen von magnetometrischen Daten ein Gradiometer ist, das geeignet ist, Gradientendaten von mindestens einer der Komponenten des Gradiententensors des Feldes Gx oder Gy oder Gz zu erzeugen.

16. Vorrichtung zur Aufnahme und Bearbeitung magnetometrischer Daten nach Anspruch 15, **dadurch gekennzeichnet, dass** das Mittel zum Messen von magnetometrischen Daten ein Gradiometer ist, das geeignet ist, Gradientendaten von mindestens einer der Komponenten des Gradiententensors des Feldes Gx oder Gy oder Gz und magnetometrische Daten der Stärke B(s) zu erzeugen.

17. Vorrichtung zur Aufnahme und Bearbeitung magnetometrischer Daten nach Anspruch 15, **dadurch gekennzeichnet, dass** das Mittel zum Messen von magnetometrischen Daten ein Gradiometer ist, das geeignet ist, Gradientendaten von mindestens einer der Komponenten des Gradiententensors des Feldes Gx oder Gy oder Gz und vektorielle magnetometrische Daten Bx(s), By(s) und Bz(s) zu erzeugen.


**Claims**

1. A method for acquiring and processing magnetometric data for at least two-dimensional map representation of magnetometric features of a geographic area including:

   - a step of measuring the intensity of the magnetic field (1) on a geographic area producing a set of intensity magnetometric data B(s) forming a map of magnetic anomalies (2), s representing the curvilinear abscissa along the trajectory of the survey,
   - a step of 2D-interpolation calculation (3) applied to the set of intensity magnetometric data B(s) producing a set of intensity magnetometric data B(x,y) referred to according to the referentials x and y on a 2D interpolation map (4),
   - a step of calculating the reduction to the poles (5) applied to the set of interpolated intensity magnetometric data B(x,y) producing a set of magnetometric data reduced to the poles B'(x,y) represented on a 2D reduction map to the poles (6),
   - a step of calculating the analytical signal (7) applied to the set of interpolated intensity magnetometric data B(x,y) producing a set of analytical magnetometric data B'(x,y) represented on a 2D map of the analytical signal (8), **characterised in that** it includes: gridding the map of magnetic anomalies (2) into a matrix of pixels,

- a step of local and real-time updating of the map of magnetic anomalies by an elementary measuring step (22) of the intensity of the magnetic field on a reduced geographic area producing an elementary series of magnetometric data associated with an updated pixel (23),

- a step of local and real-time updating of the 2D interpolation map (24) by applying the 2D interpolation calculation in the vicinity of the updated pixel (25), producing pixels on an updated 2D interpolation map (26),

- a step of local and real-time updating of the 2D reduction map to the poles (27) by application to the updated 2D interpolation map (26) of the reduction calculation to the poles for the updated pixel (23) and in the vicinity of said updated pixel (25), producing pixels on an updated map of magnetometric data reduced to the poles (28),

- a step of local and real-time updating of the 2D map of the analytical signal (29) by application to the updated 2D interpolation map (26) of the calculation of the analytical signal for the updated pixel (23) and in the vicinity of said updated pixel (25), producing pixels on an updated map of analytical magnetometric data (30).

2. A method for acquiring and processing magnetometric data according to claim 1, **characterised in that** the step of local and real-time updating of the 2D interpolation map (24) includes a calculation of minimal curvature type.

3. A method for acquiring and processing magnetometric data according to claim 1 or 2, **characterised in that** the step of local and real-time updating of the 2D reduction map to the poles (27) includes a step of applying a convolution mask (45) in the spatial domain.

4. A method for acquiring and processing magnetometric data according to claim 1 or 2, **characterised in that** the step of local and real-time updating of the 2D map of the analytical signal (29) includes:

- a step of applying a gradient convolution mask X (46) in the spatial domain producing a filtered sub-image according to the referential X (37),
- a step of applying a gradient convolution mask Y (47) in the spatial domain producing a filtered sub-image according to the referential Y (38),
- a step of applying a gradient convolution mask Z (48) in the spatial domain producing a filtered sub-image according to the referential Z (39),
- a step of compounding filtered sub-images according to the referentials X, Y and Z (44).

5. A method for acquiring and processing magnetometric data according to claim 1 or 2, **characterised in that** it includes a step of extracting (49) of a sub-set to be treated (50) of the updated 2D interpolation map (26), the sub-set to be treated (50) comprising the updated pixel (23) and the vicinity of said updated pixel (25).

6. A method for acquiring and processing magnetometric data according to claim 5, **characterised in that** the steps of local and real-time updating of the 2D reduction map to the poles (27) and of the 2D map of the analytical signal (29) are applied solely to the sub-set to be treated (50).

7. A method for acquiring and processing magnetometric data according to claim 6, **characterised in that** the step of local and real-time updating of the 2D reduction map to the poles (27) includes a multiplying operation by a complex filter (51) applied in the Fourier domain to the sub-set to be treated (50) generating a treated sub-set (52).

8. A method for acquiring and processing magnetometric data according to claim 6, **characterised in that**:

- the step of local and real-time updating of the 2D map of the analytical signal (29) includes a multiplying operation by a gradient filter X (53), a multiplying operation by a gradient filter Y (54), a multiplying operation by a gradient filter Z (55) applied in the Fourier domain to the sub-set to be treated (50), wherein each operation is applied alone so as to provide three maps, one of gradient X (56), another of gradient Y (57), and the third of gradient Z (58), the three maps (56, 57, 58) are compounded so as to generate a single treated sub-set (52).

9. A method for acquiring and processing magnetometric data according to claim 7 or 8, **characterised in that** the steps of local and real-time updating of the 2D reduction map to the poles (27) and of the 2D map of the analytical signal (29) include a step of re-combining (60) the treated sub-set (52) with the remainder of the sub-sets (61).

10. A method for acquiring and processing magnetometric data according to any one of claims 1 to 9, **characterised in that** a Euler deconvolution is applied, locally and in real time, to the updated pixel (23) and in the vicinity of said updated pixel (25) on the 2D map of the updated analytical signal (30) so as to enable referencing the magnetic sources according to the referential z.

11. A method for acquiring and processing magnetometric data according to any one of claims 1 to 9, **characterised in that** a Euler deconvolution is applied, locally and in real time, to the updated pixel (23) and in the vicinity of said updated pixel (25) on the 2D map of the updated analytical signal (30) so as to enable calculating the index of the magnetic sources generating the pixels of analytical magnetometric data.

12. A device for acquiring and processing magnetometric data for the production of a map with at least two-dimensional representation of magnetometric features of a geographic area comprising a means for measuring magnetometric data producing a signal forming a map of magnetic anomalies, a unit for processing said signal producing a 2D map of reduction to the poles and a 2D map of the analytical signal **characterised in that** the processing unit implements, locally and in real time, the method of any one of claims 1 to 11.

13. A device for acquiring and processing magnetometric data according to claim 12, **characterised in that** the means for measuring magnetometric data includes at least one scalar magnetometric sensor.

14. A device for acquiring and processing magnetometric data according to claim 12, **characterised in that** the means for measuring magnetometric data is a vectorial magnetometric sensor capable of generating vectorial magnetometric data Bx(s), By(s) and Bz(s), Bx(s), By(s) and Bz(s) being the three components of the magnetic field B(s).

15. A device for acquiring and processing magnetometric data according to claim 12, **characterised in that** the means for measuring magnetometric data is a gradiometer capable of generating gradient data of at least one of the components of the gradient tensor of the field Gx or Gy or Gz.

16. A device for acquiring and processing magnetometric data according to claim 15, **characterised in that** the means for measuring magnetometric data is a gradiometer capable of generating gradient data of at least one of the components of the gradient tensor of the field Gx or Gy or Gz and intensity magnetometric data B(s).

17. A device for acquiring and processing magnetometric data according to claim 15, **characterised in that** the means for measuring magnetometric data is a gradiometer capable of generating gradient data of at least one of the components of the gradient tensor of the field Gx or Gy or Gz and vectorial magnetometric data Bx(s), By(s) and Bz(s).

Acquisition d'un ensemble
complet de données — 1

↓

Géoréférencement — 31

↓

Interpolation 2D — 3

↓

Expansion — 9

↓

FFT — 11

5 ↙                    7 ↘

| **X** Filtre Complexe | **X** Filtre Gradient X | **X** Filtre Gradient Y | **X** Filtre Gradient Z |

↓ | ↓ | ↓ | ↓

| FFT Inverse | FFT Inverse | FFT Inverse | FFT Inverse |

↓ | ↓ | ↓ | ↓

| **X** Masque | **X** Masque | **X** Masque | **X** Masque |

↓

Carte 2D
de réduction aux
pôles masquée — 15

Composition

↓

Carte 2D
du signal analytique
masquée — 8

## ART ANTERIEUR
## FIGURE 1

A)

2  3  4

B)

4  9  10  11  12

C)

12  X  13  + TTF inv → 6

ART ANTERIEUR
FIGURE 2

D) 2

14

E) 6

14

15

X

ART ANTERIEUR
FIGURE 3

F)

ART ANTERIEUR
FIGURE 4

Mesure
élémentaire — 22

Géoréférencement — 31

Création de cartes — 32

Décimation — 33

Interpolation 2D
locale — 24

27    29

45    47    48

46

* Masque Réduction
aux Pôles

* Masque
Gradient X

* Masque
Gradient Y

* Masque
Gradient Z

X Masque

X Masque

X Masque

X Masque

Composition — 44

Carte 2D de réduction
aux pôles masquée
Mise à jour — 63

Carte 2D du signal
analytique masquée
Mise à jour — 30

FIGURE 5

FIGURE 6

**Masque Gradient X**

**Masque Gradient Y**

**Masque Gradient Z**

FIGURE 7

Mesure
élémentaire — 22

Extraction d'un
sous-ensemble — 49

Expansion

FFT

27

29

**X** Filtre
Complexe

**X** Filtre
Gradient X

**X** Filtre
Gradient Y

**X** Filtre
Gradient Z

FFT Inverse

FFT
Inverse

FFT
Inverse

FFT
Inverse

Recombinaison des
sous-ensembles — 60

**X** Masque

**X** Masque

**X** Masque

**X** Masque

Composition — 44

Carte 2D
de réduction aux pôles
masquée mise à jour

Recombinaison des
sous-ensembles — 60

28

Carte 2D
du signal analytique
masquée mise à jour — 30

FIGURE 8

FIGURE 9

FIGURE 10

61

61

52

61

30

FIGURE 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BRIGGS, I. C.** Machine contouring using minimum curvature. *Geophysics,* 1974, vol. 39, 39-48
- **SMITH, W. H. F. ; WESSEL, P.** Gridding with continuous curvature splines in tension. *Geophysics,* 1990, vol. 55, 293-305
- **WESSEL P. D. ; BERCOVICI.** résolution d'un système d'équations linéaires. *Gridding with Splines in Tension : A Green function Approach, Math. Geol.,* 1998, vol. 30, 77-93
- **SMITH W. H. F. ; WESSEL P.** résolution par différence finie. *Gridding with continuous curvature splines in tension : Geophysics,* 1990, vol. 55, 293-305
- **SMITH W. H. F. ; WESSEL P.** Gridding with continuous curvature splines in tension. *Geophysics,* 1990, vol. 55, 293-305
- **MICHEL ARNAUD ; XAVIER EMERY.** Estimation et interpolation spatiale : Méthodes déterministes et méthodes géostatistiques. Hermes Science publications, 2000
- Gridding of Geophysical Potential Fields from Noisy Scattered Data, Michael Rauth. These. 1998
- **SAMBRIDGE M. ; BRAUN J ; MCQUEEN H.** Geophysical parameterisation and interpolation of irregular data using natural neighbours. *Geophysical J. International,* 1995, vol. 122, 837-857
- **AKIMA H.** A new method for interpolation and smooth curve fitting based on local procedures. *J. Association Computing Machinery,* 1970, vol. 17, 589-602
- **REID et al.** Magnetic interpretation it three dimensions using Euler deconvolution. *Geophysics,* 1990, vol. 55, 80-91
- **M.F. MUSHAYANDEBVU ; V. LESUR ; A.B. REID ; J.D FAIRHEAD.** Grid Euler Deconvolution with constraints for 2D structure. *Geophysics,* 2004, vol. 69 (2), 489-496